(19) Europäisches Patentamt
European Patent Office
Office européen des brevets

(11) **EP 1 779 994 B1**

(12) **EUROPEAN PATENT SPECIFICATION**

(45) Date of publication and mention
of the grant of the patent:
**05.06.2013 Bulletin 2013/23**

(21) Application number: **05780154.0**

(22) Date of filing: **27.07.2005**

(51) Int Cl.:
***B29C 49/64*** (2006.01)   ***B29K 67/00*** (2006.01)

(86) International application number:
**PCT/JP2005/013723**

(87) International publication number:
**WO 2006/011507 (02.02.2006 Gazette 2006/05)**

(54) **METHOD OF PRODUCING THERMOPLASTIC RESIN HOLLOW MOLDED PRODUCT**

VERFAHREN ZUR HERSTELLUNG EINES HOHLEN FORMKÖRPERS AUS THERMOPLASTISCHEM HARZ

PROCÉDÉ DE FABRICATION D'UN PRODUIT CREUX MOULÉ EN RÉSINE THERMOPLASTIQUE

(84) Designated Contracting States:
**DE FR**

(30) Priority: **29.07.2004 JP 2004222134**

(43) Date of publication of application:
**02.05.2007 Bulletin 2007/18**

(73) Proprietor: **Mitsui Chemicals, Inc.**
**Tokyo 105-7117 (JP)**

(72) Inventors:
• **KUROSAKI, Yasuo**
**Kanagawa;2230061 (JP)**
• **HAMA, Takashi**
**Sodegaura-shi, Chiba;2990265 (JP)**

(74) Representative: **HOFFMANN EITLE**
**Patent- und Rechtsanwälte**
**Arabellastrasse 4**
**81925 München (DE)**

(56) References cited:
**WO-A1-01/21709      JP-A- 2000 313 053**
**JP-A- 2000 313 053    JP-A- 2001 513 465**
**JP-A- 2003 236 922    JP-A- 2003 523 848**
**JP-B2- 3 163 168      JP-Y2- 7 039 196**
**US-A- 5 256 341**

# EP 1 779 994 B1

**Description**

Technical Field

The present invention relates to a process for producing a hollow molded product such as a bottle with high productivity.

Background Art

Conventionally, as materials for containers of seasonings, oils, beverages, cosmetics, detergents and the like, various resins are adopted depending on the type and use purpose of their filling contents.
Of these, polyethylene terephthalate among polyester resins has excellent mechanical strength, heat resistance, transparency and gas barrier, so that it is very suitable as a material for a hollow molded product for filling beverages such as juice, soft drinks and carbonated drinks.

Such a polyethylene terephthalate can be obtained by esterifying terephthalic acid or its ester-forming derivatives and ethylene glycol or its ester-forming derivatives, subjecting to liquid-phase polycondensation in the presence of a polycondensation catalyst, and then subjecting to solid-phase polycondensation. Moreover, as a process for molding a bottle using the polyethylene terephthalate, there is a method in which the polyethylene terephthalate is fed into a molding machine such as an injection molding machine to form a pre-molded product called a preform or a parison, and then the parison is fed to a blow molding machine. The blow molding in the machine comprises two steps of a heating step and a blowing step. In the heating step, the parison is heated at a predetermined temperature using an infrared heater in the short wavelength region to soften the material of the parison. Then, the heated parison is transferred to the blowing step and inserted into a mold in a predetermined shape, and stretch-blow molding is carried out by means of a rod called a stretch rod and high pressure air. Finally, the resultant bottle is taken out from the mold to obtain a hollow container. In general, heating and blowing is carried out sequentially in the blow molding system.

Particularly, beverages that are favorable in Japan such as fruit drinks, teas and sports drinks are required to fill into a bottle after heat-sterilization, and the filling temperature is about 80°C to 93°C depending on the beverages. Therefore, the bottle is required to have a heat resistance. When a bottle has a low heat resistance, it deforms when filling a beverage and cannot maintain its shape. This deformation is attributed to the stretch strain generated during the stretch-blow molding. As a method for giving a heat resistance to a bottle, there is a method in which the mold temperature in the stretch-blow molding is controlled at, e.g., 130°C or higher and the heat treatment (heat set) is carried out by means of a high pressure air when polyethylene terephthalate is adhered to the surface of a mold at a high temperature. The stretch strain in the step called heat set is relaxed by the heat to obtain a heat-resistant bottle capable of maintaining its shape without deforming even when the bottle is filled with a beverage at a high temperature. When the heat set is carried out, there is a possibility that a shrink deformation may generate when taking out the bottle from the mold. This is due to the remaining stretch strain that was not relaxed during the heat set step. Therefore, after the heat set, the inside of the bottle is forced to be cooled by spraying and circulating cooling air to solidify the bottle, and then the bottle is taken out from the mold.

However, when the conventional heat set is carried out, the heat set time and the cooling time required to prevent deformation of a heat set bottle when taken out from the mold are necessary. As a cooling method, a method of forced cooling from the inside of a hollow container by blowing air from the inside of the stretch rod is general. Meanwhile, when molding a hollow container that does not require a heat resistance, it is not necessary to relax the strain, thus the heat set is not necessary and the molding can be carried out with a low mold temperature of about 30°C. Since the mold temperature is low, the hollow container can be taken out from the mold without forced cooling from the inside of the bottle. That is, as compared with the molding of the hollow container that does not require heat resistance, the molding of the heat-resistant bottle requires longer time in the blowing step including the heat set time required for relaxing the stretch strain and the forced cooling time required for taking out the hollow molded product, thus the productivity is significantly lowered.
Therefore, a process for producing a hollow molded product having excellent heat resistance with high productivity without carrying out heat set is demanded.

As a method of reducing the cooling time of a heat set bottle in order to improve the productivity of the heat-resistant bottle, for example, Japanese Patent No. 2632960 presents a method of improving cooling efficiency using a liquid nitrogen as a substitute for air. However, in this method, the cost for the liquid nitrogen is high, and the safety management for using nitrogen is required.

Next, as a method of reducing the time required for the heat set step, for example, there is mentioned a method of reducing the strain during heat set by controlling the temperature of the parison to be higher when stretch-blowing and inhibiting the generation of the stretch strain through even more softening the material. This method is very effective means because the process time can be reduced due to that the mold temperature is lowered by inhibiting the generation of the stretch strain during stretch blowing, and the cooling time required for taking out the bottle from the mold can be reduced due to that the temperature of the hollow container is lowered.

However, the blow molding machine is a continuous system as described above, and when the time for the blowing step is reduced, the time for heating the parison must also be reduced. That is, in the conventional method, it is very difficult to heat the parison to even higher temperature in shorter time.

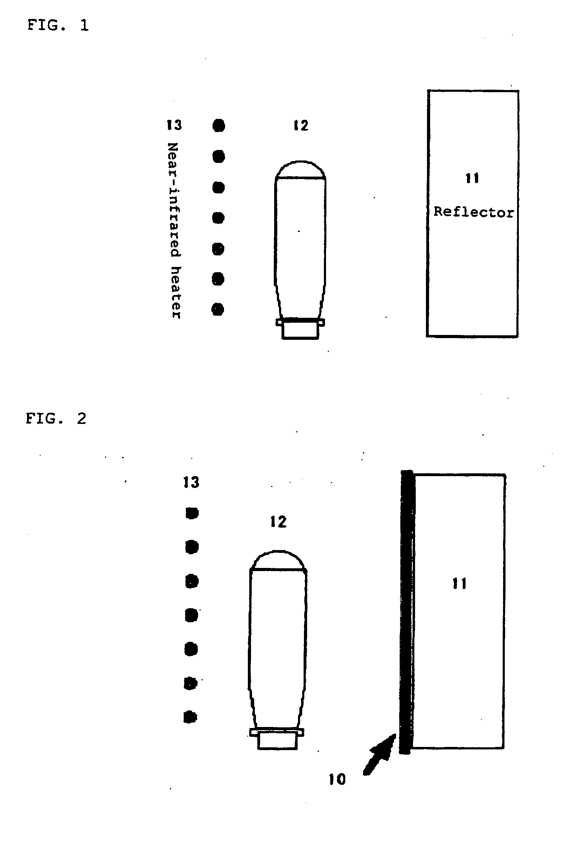

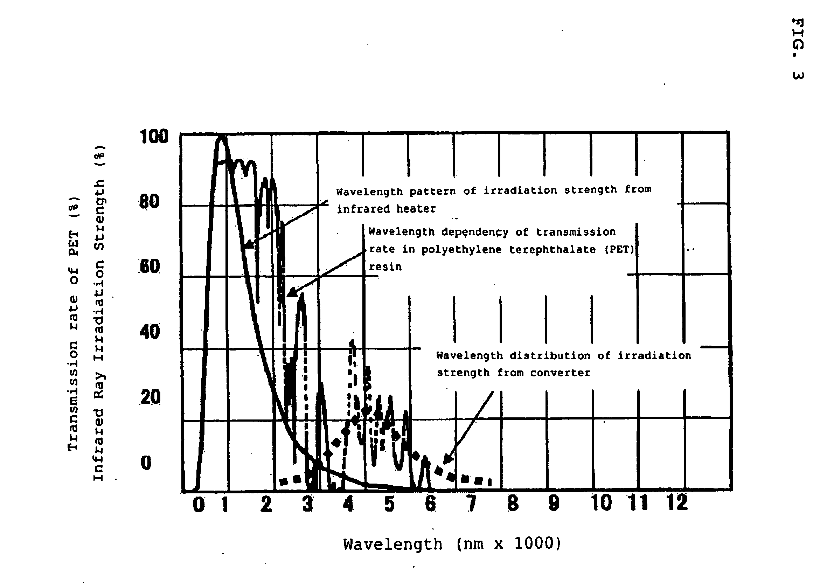

In the conventional heating method, an infrared heater having a maximum radiation energy at the wavelength region of about 900 nm is used. However, the large energy of the infrared heater at the wavelength region of 3000 nm or lower is hardly absorbed into the parison (see Fig. 3: polyester resin absorption spectrum). That is, in the conventional heating method, most of the radiation energy from the infrared heater is transmitted through the parison and reaches the reflector (see Fig. 1: heating method). The irradiation energy that is absorbed into the parison and is used for elevating the temperature is an radiation energy at a long wavelength region of 3000 nm or longer.

As a means to solve the above problem, for example, Japanese Patent No. 1851514 or JP-A No. 01-294025 presents a method of internally heating a parison in which a heating source is inserted therein and externally heating by a typical infrared heater. Further, Japanese Patent No. 3163168 presents a method of improving heating efficiency by inserting a rod-shape apparatus similar to the black body in the parison so that the wavelength of the typical infrared heater is converted to a long wavelength infrared radiation that is absorbed easily into a polyester resin. These means are effective as a method for improving heating efficiency inside the parison, which is difficult in the typical heating method, however the heating system of the current molding machine must be changed significantly in order to insert a heating source inside the parison.

The technique described in Japanese Patent No. 3163168 is that a rod-shape core is inserted into the inside of the parison, but in this case, the size of the core is limited to smaller size than the parison. Therefore, in the same manner as in the conventional heating method, most of the energy emitted from the infrared radiation is transmitted through the parison and reaches the reflector and is reflected therefrom. The wavelength distribution of the infrared radiation reflected from the reflector does not change. Therefore, the reflected radiation light does not have an energy capable of being absorbed into the parison, and the reflected infrared light at the wavelength of 3000 nm or lower is transmitted through the parison and reaches the infrared heater, resulting in reheating of the heater. Thus, this technique has a problem that the temperature of the infrared heater is increased, which may be a cause for destructing by the high temperature.

Moreover, the technique of Japanese Patent No. 3163168 requires that heating is carried out by inserting a core as a heating source inside the parison, and pulling out the core before blow molding. Therefore, speeding up of the molding process has its limit. Further, since the size and shape of the parison vary depending on the capacity or design of the hollow molded product, it is necessary to change the specification of the core to meet the parison when changing the size or shape of the parison.

JP 2000 313053 A describes a cold parison blow-molding method, whereby heating is performed using a ceramic lamp heater with a radiation peak wavelength of not less than 3 $\mu$m.

[Patent Document 1] JP-A No. 02(1990)-074319
[Patent Document 2] JP-4 No. 01(1989)-184118
[Patent Document 3] JP-A No. 01(1989)-294025
[Patent Document 4] Japanese Patent No. 3163168

Disclosure of the Invention

Problem to be solved by the Invention

In order to solve the above-mentioned problems, the present invention proposes a process for providing a hollow molded product having excellent heat resistance with high productivity using a heating method of a preform or parison without making a significant change to a molding machine.

Means to solve the Problem

On the basis of the above problems, the present inventors have studied thoroughly on a method of heating a parison with good efficiency in a blow molding of a hollow product. As a result, they have focused on the irradiation energy in the long wavelength region of 3000 nm or more that is capable of absorbing in polyesters and is capable of heating the same, and found a method of locating a converter which emits a long wavelength of 3000 nm or more, in addition to the conventional near-infrared heater. Thus, the present invention has been completed.

Accordingly, the present invention provides:

(1) A process for producing a resin hollow molded product, which comprises the step of heating a parison formed of a thermoplastic resin material, and the step of blow molding the heated parison,

the heating step involving a near-infrared heater and a wavelength converter, the near-infrared heater emitting radiation with a maximum energy wavelength in the range of 900 nm to 1500 nm, the wavelength converter being capable of absorbing the radiation from the near-infrared heater and capable of emitting the radiation as an infrared radiation with a wavelength longer than the maximum energy wavelength,

the wavelength converter being located on the outside of the parison. In the heating step, the parison of the thermoplastic resin material is heated by a near-infrared radiation emitted from a heater and a near-infrared radiation emitted from a wavelength converter, the radiation emitted from the heater has a maximum wavelength in the range of 900 nm to 1500 nm, and the radiation emitted from the converter has a wavelength longer than the maximum wavelength.

Preferred embodiments of the invention are further provided below.

(2) The wavelength converter emits radiation having a maximum energy wavelength in the range of 3000 nm to 5000 nm.

(3) The wavelength converter is formed of carbon black and/or graphite.

(4) The converter is formed on an inorganic material which mainly contains oxides of metals selected from silicon, calcium and magnesium, or calcium sulfate, and the thickness thereof is in the range of from 10 $\mu$m to 5 mm.

(5) The wavelength converter is located at an opposed location to the near-infrared heater with the parison to be heated in between.

(6) The wavelength converter is formed of a material having an emissivity of 0.9 or more, and more preferably the material having a heat resistance of 300°C or higher.

(7) The thermoplastic resin is a polyester resin selected from polyethylene terephthalate, aromatic polyester or polyethylene naphthalate.

Here, the wavelength converter refers to a material capable of absorbing energy emitted from the infrared heater and capable of emitting energy in the long wavelength region of 3000 nm or more. As such a material, a material having a surface with an emissivity of 0.9 or more is suitable. When this converter is located on the conventional reflector, the radiation energy which has been transmitted through a parison and has reached the converter is absorbed into the converter, and then the radiation energy having a spectrum distribution close to a black radiation corresponding to the temperature of the converter is reemitted. For example, when the temperature of the converter is 400°C, the maximum value of the irradiation energy is near the wavelength of 4000 nm, and the infrared radiation in the long wavelength region having this spectrum distribution is effectively absorbed into the parison.

The thermoplastic resin material is not particularly limited, but from the viewpoint of effectively absorbing the radiation energy from the wavelength converter, polyester resins are preferred, and particularly aromatic polyester resins selected from polyethylene terephthalate, polyethylene isophthalate or polyethylene naphthalate are preferred.

In the present invention, when compared with the process of Patent Document 4, the converter is located at the outside of a resin preform or parison to be heated. That is, the converter is located such that it covers completely or partly a reflector, a partition or the like surrounding the heater at a distance. Therefore, the converter absorbs the energy emitted from the infrared heater or the heat of the gas warmed by the infrared heater, thus the atmospheric temperature in the heating furnace is lowered. That is, the parison is heated to a predetermined temperature, whilst the atmospheric temperature in the heating furnace is lowered. It is advantageous in that the life span of the heater is also prolonged due to lowering the surface temperature of the infrared heater as the atmospheric temperature becomes lowered. Since the size of the converter is not limited to the size of the parison, it can be enlarged. As a result, the use efficiency of the energy emitted from the infrared heater is increased, thus the heating can be carried out by using a typical single wavelength infrared heater.

Effect of the Invention

The process for producing a hollow molded product of the present invention is capable of producing a hollow molded product with high productivity, as compared with a conventional production method of a bottle.

Brief Description of the Drawings

Fig. 1 shows a heating method by a conventional near-infrared heater.

Fig. 2 shows a heating method by a near-infrared heater and a wavelength converter of the invention.

Fig. 3 shows radiation spectra of the near-infrared heater and the wavelength converter, and an absorption spectrum of the polyester resin.

Fig. 4 shows the step of hollow-blow molding a parison.

Fig. 5 shows the shape of a parison.

Reference Numerals

| 1 | cap (unstretched portion) |
|---|---|
| 2 | height of stretched portion |
| 3 | outer diameter of parison |
| 4 | inner diameter of parison |
| 5 | thickness of parison |
| 10 | wavelength converter |
| 11 | reflector |
| 12 | parison |
| 13 | near-infrared heater |
| 14 | blow mold |
| 15 | stretch rod |
| 16 | blow air |
| 17 | cooling air |

Best Mode for Carrying Out the Invention

Hereinbelow, the molding of a polyester resin bottle according to the present invention will be described in detail. As a material for a container produced by the process for producing a plastic container of the invention, a polyester resin is preferred. The polyester resin is prepared using dicarboxylic acid or its ester-forming derivatives and diol or its ester-forming derivatives as raw materials. Preferably, a polyester resin polymerized using aromatic dicarboxylic acid or its ester-forming derivatives and aliphatic diol or its ester-forming derivatives as raw materials is used.

When a hollow container (bottle) as a container is formed by, for example, blow molding, two steps including injection molding and blow molding are adopted. Firstly, in the injection molding step, a polyester resin in a molten state is injected into a mold, cooled, and then taken out from the mold to form a parison.

Next, in the blow molding step, a bottle is formed generally by heating the parison to a predetermined temperature by a heater, inserting into a mold of a desired shape, and then blowing a high pressure air to fit the parison to the mold. Further, in the case of a heat-resistant bottle which requires a heat resistance, the strain generated during blowing (stretching) may be relaxed during fitting through a method called heat set by adjusting the mold temperature to, for example, 130°C or higher.

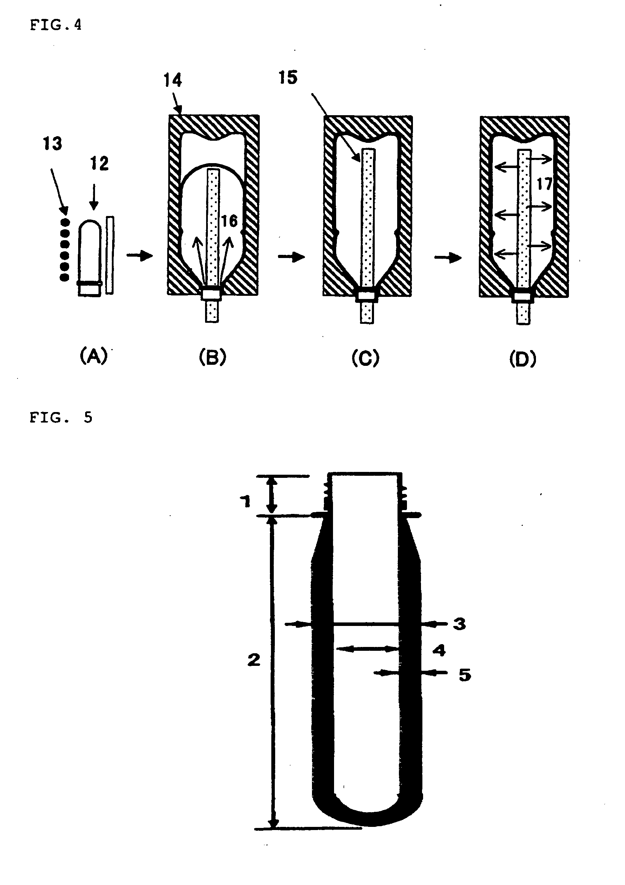

The step of blow molding is shown in Fig. 4.

As a heating method, using a heater emitting an infrared radiation in the region of the maximum energy wavelength at 900 nm to 1500 nm, the heating is carried out from the outside of the parison. In the invention, the wavelength region of 740 nm to 3000 nm is referred to as near-infrared radiation and the wavelength region of 3000 nm to 1000 μm is referred to as far-infrared radiation. However, since most of the near-infrared radiation is transmitted through polyester resins, in the conventional method where a wavelength converter is not used, heating is carried out at the atmospheric temperature between the heater and the reflector in the opposite side (Fig. 1). Therefore, the inside of the parison having a thick thickness is difficult to be heated, and the temperature difference between the outer surface and the inner surface easily becomes very large. In the case of the heat-resistant bottle, it is necessary to reduce the time for the heat set step by suppressing the strain caused by the blowing (stretching) as much as possible for the improvement in the bottle productivity. Therefore, the temperature of the parison needs to be more elevated than that of the bottle which does not require a heat resistance, thus in the conventional heating method, it is necessary to prolong the heating time or increase the power of the heater.

Therefore, as a heating method, a method of effectively heating the inside of a parison is preferred.

There are two main methods for heating the inside of a parison effectively. First, there is a method of heating from the inside of the parison by inserting a heater into the parison in addition to heating from the outside of the parison as in the conventional way. This method is excellent in the point that the inside is directly heated, but there is a problem that the significant change of the apparatus in the continuous production machine is required. Next, there is a method of induction-heating by an electromagnetic line. The polyester resin hardly absorbs the near-infrared radiation emitted from a heater used in the current processing machine, thus the conversion amount to the heat is small. Therefore, the infrared radiation in the long wavelength region having high absorbability is effective as the induction-heating. As a method of emitting the infrared radiation in the long wavelength, a far-infrared heater is mentioned.

In the invention, the conventional near-infrared heater is used for a heat source, and also a wavelength converter absorbing a near-infrared radiation and emitting the infrared radiation of even longer wavelength is used from the outside of the preform or parison. The infrared radiation of the maximum energy wavelength at 3000 to 5000 nm is emitted from the converter heated by the near-infrared heater and is absorbed into polyester, thus it becomes possible to heat with even better efficiency.

The material for the wavelength converter needs to emit an infrared radiation in a long wavelength with good efficiency, thus it is preferred that the emissivity in consideration of its radiation ability is 0.9 or more. Further, since the wavelength converter itself becomes high temperature by absorbing the near-infrared radiation, it is necessary that the wavelength converter is not degraded or deteriorated at high temperature of 300°C and preferably about 400°C. As the material for the wavelength converter, a material mainly formed of carbon black or graphite is preferred due to having a high emissivity of 0.9 or more. Charcoals, cokes or the like may also be used. Carbon black or graphite may be used as a solid itself or a compressed powder, or a layer of the wavelength converter may be formed by applying an emulsion of the carbon black or graphite dispersed in water or an organic solvent on the surface of a solid substrate.

As a method of locating the converter, a method of applying the carbon black, graphite or the like in the state of a liquid or paste dispersed in a solvent on a substrate is preferred from the viewpoint that the converter can be formed in an arbitrary size or shape. There may also be used a converter previously processed to a plate shape. In the case of the paste state converter having a thickness of usually from about 10 $\mu$m to 5 mm, preferably from about 50 $\mu$m to 3 mm, and even more preferably from about 100 $\mu$m to 1 mm, the converter can emit radiation effectively, and is resistant to peeling off from the substrate.

As a substrate for applying the converter, in the invention, there can be used a material used for thermal insulation in the heating furnace called a reflector which is readily located in the current blow molding machine. However, when the heat loss from the substrate is large, the temperature of the converter is decreased, and the emission of the far-infrared radiation becomes small. Therefore, in the case where a material having good heat conductance such as metal is located, the heat loss from the back of the metal plate is large, thus the material is not suitable. From the viewpoint of heat resistance and heat loss, the substrate of an inorganic material which mainly contains oxides of elements such as silicon, calcium and magnesium, or calcium sulfate is preferred; for example, a plaster, a brick or the like are suitable as the material.

An example of the heating furnace in the invention is shown in Fig. 2. It is preferable from the viewpoint of heat efficiency that the wavelength converter is located at an opposed location to the near-infrared heater with the resin material to be heated in between. However, the layout is not limited to Fig. 2; for example, the wavelength converter may be placed to cover the top and bottom or the back surface of the heater. Moreover, in the Figure, the wavelength converter is in a plate shape, but it may have a curved surface or convexo-concave.

In the invention, the change of a current machine is made only by installing a converter, moreover, the use of the converter is preferred from the viewpoint that the near-infrared heater can be used effectively, as compared with installing the far-infrared heater. Further, the invention is advantageous in that the damage in the heater can be reduced by suppressing the temperature elevation of the infrared heater.

The invention can be used preferably for producing a hollow molded product formed of polyethylene terephthalate. The molding of the hollow product formed of polyethylene terephthalate will be described below.

(Forming of parison)

A parison can be obtained by injection molding a thermoplastic resin material. As shown in Fig. 5, the parison is composed of a cap (unstretched portion) 1 and a stretched portion 2 where the bottom is closed.

For the injection molding step, there can be used the known method described in Yuki Kazuo, "Saturated Polyester Resin Handbook," Nikkan Kogyo Shinbunsha (1989). The temperature of the injection molding is preferably 270 to 300°C.

(Hollow-blow molding process)

A hollow bottle can be obtained by blow molding the parison. The step of blow molding is shown in Fig. 4. (A) The parison 12 is generally heated to a predetermined temperature using an infrared heater 13, and (B) inserted into a blow mold 14 of a predetermined shape, and high pressure air 16 is blown into the parison. (C) The bottle is formed by fitting the parison to the mold 14, and (D) the bottle is cooled and taken out.

(Blow molding temperature)

When the outer surface temperature and the inner surface temperature during blow molding the parison are T1 and T2, respectively, T1 is preferably 120 to 160°C, and more preferably 130 to 140°C. Similarly, T2 is preferably 110 to 150°C, and more preferably 120 to 140°C. When the parison temperature is in the above-mentioned ranges, the heat resistance of the hollow product is improved when blow molded, thus the above parison temperature is preferred. The heating time is generally 20 to 40 seconds and preferably 25 to 30 seconds.

(Stretch ratio on blowing)

The stretch ratio when the parison is hollow-blow molded is preferably 8 to 10 folds. When the stretch ratio is in the range of 8 to 10 fold, the heat resistance of the obtained hollow product is improved, thus the above stretch ratio is preferred.
Furthermore, the stretch ratio is shown by the area which is a product of MD direction (circumferential direction of parison) and TD direction (vertical direction).

Examples

Hereinbelow, the invention will be described with reference to the following Examples, but the invention is not limited to these Examples.

EXAMPLE 1

(Preparation of polyester)

A slurry adjusted by mixing high-purity terephthalic acid and ethylene glycol was fed continuously to a reactor, where 33500 parts by weight of a reaction liquid is maintained during steady operation. While stirring, the esterification reaction was carried out under the conditions of nitrogen atmosphere, 260°C and 0.9 kg/cm2-G. The adjustment was carried out by mixing high-purity terephthalic acid and ethylene glycol in the ratio of 6458 parts by weight/hour and 2615 parts by weight/hour, respectively.
In the esterification reaction, a mixture of water and ethylene glycol was distilled off. The esterified product (lower condensate) was controlled such that the average retention time was 3.5 hours, and was distilled off continuously. The number average molecular weight of the lower condensate of ethylene glycol and terephthalic acid obtained in the above was 600 to 1300 (3 to 5-mers).
To the obtained lower condensate, a germanium catalyst solution was added, and a liquid phase polycondensation reaction was carried out under the conditions of 285°C and 1 torr.
The time required for the intrinsic viscosity of the obtained amorphous polyethylene terephthalate to reach 0.55 dl/g was 50 minutes.
Furthermore, a solid phase polycondensation was carried out on the polyethylene terephthalate resin in a pellet shape in the presence of a circulating nitrogen gas at 210°C. The intrinsic viscosity of the obtained polyethylene terephthalate was 0.76 dl/g.

(Parison molding)

The obtained polyethylene terephthalate was dried using a dehumidifying air drier at 170°C for 4 hours. The water content in the resin after drying was 40 ppm or less. The dried polyethylene terephthalate was formed into a parison using an injection molding machine LX160 manufactured by HUSKY Corp., at the cylinder set temperature of 285 to 290°C and the molding cycle of about 22 seconds.

(Forming of bottle)

The obtained parison was inserted into a blow molding machine manufactured by Corpoplast and heated for about 30 seconds until the outer surface temperature of the parison became 130°C using an infrared heater having a maximum energy wavelength of about 1000 nm to carry out blow molding at the bottle production speed of 1400 bottles/type/hour per one mold. At this time, the heating method is shown in Fig. 2. A converter was prepared by applying a solution of carbon black dispersed in water on the surface of a reflector made of plaster and then wind drying. The thickness, at this time, of the coating was about 200 $\mu$m. The infrared wavelength emitted from the converter during heating was assumed to be about 4 $\mu$m (4000 nm) due to that the surface temperature was 400°C, based on the Wien's Law (the wavelength where the radiation energy density becomes maximum ($\mu$m) = 3000/surface temperature (K).). (Fig. 3). Further, the mold temperature was 100°C. The result of heat resistance of the bottle, at this time, is shown in Table 1.

(Method for measuring heat resistance of the bottle: heat shrinkage rate)

The volume of a bottle was measured by water (I). Next, after removing the water, the bottle was stored in an oven for 1 week at 40°C and relative humidity of 90%. After the storage, the bottle was filled with heated water of 87°C, and the mouth was sealed with a cap. The bottle was laid to the sideways for 15 seconds and then upside down. After leaving to stand for 4 minutes and 45 seconds, water was contacted to the bottle so that the content in the bottle is cooled to room temperature. The cooling time was 30 minutes.

The content of the bottle was removed, and deformation in the base and shoulder of the bottle was observed. Further, the volume of the bottle was measured by water (II). A volume change rate was calculated from the volume of the bottle (I) which was measured before filling with the heated water.

$$\texttt{Volume change rate (\%) = [(I-II)/I]} \times \texttt{100}$$

The bottle passed the test when no deformation was visually observed in the base or shoulder with naked eyes and the volume change rate was 2% or less.

COMPARATIVE EXAMPLE 1

In the same manner as in Example 1, polyester resin bottle was molded, except that the bottle production speed was 800 bottles/type/hour per one mold, the outer surface temperature of the parison was 115°C, the mold temperature was 130°C, and a converter was not located. The heat resistance of the obtained bottle was measured in the same manner as in Example 1. The results are shown in Table 1.

COMPARATIVE EXAMPLE 2

In the same manner as in Example 1, polyester resin bottle was molded, except that the outer surface temperature of the parison was 105°C, the blow mold temperature was 30°C, and a converter was not located. The results are shown in Table 1.

From the comparison with Example, it was found that Comparative Example not using a wavelength converter had either poor heat resistance or poor production speed.

Table 1

| | Example 1 | Comparative Example 1 | Comparative Example 2 |
|---|---|---|---|
| Wavelength converter (maximum energy wavelength nm) | Yes (4000) | No | No |
| Bottle production speed (bottles/type/hour) | 1400 | 800 | 1400 |
| Mold temperature (°C) | 100 | 130 | 30 |
| Outer surface temperature of preform (°C) | 135 | 115 | 105 |
| Bottle heat resistance | | | |
| Deformation in the base and shoulder | No | No | Yes |
| Volume change rate (%) | 0.5 | 1.0 | 5.5 |
| Pass or fail | Pass | Pass | Fail |

**Claims**

**1.** A process for producing a resin hollow molded product, which comprises the steps of

heating a parison (12) formed of a thermoplastic resin material, and
blow molding the heated parison (12),
wherein the step of heating the parison (12) is **characterized by** involving a
near-infrared heater (13) emitting radiation with a maximum energy wavelength in the range of 900-1500 nm and a wavelength converter (10) being located on the outside of the parison (12) and being capable of absorbing the radiation from the near-infrared heater (13) and being capable of emitting an infrared radiation with a wavelength longer than the maximum energy wavelength.

2. The process of claim 1, wherein the wavelength converter (10) emits radiation with a maximum energy wavelength in the range of 3000-5000 nm.

3. The process of claim 1, wherein the wavelength converter (10) is formed of carbon black and/or graphite.

4. The process of claim 1, wherein the converter (10) is formed on an inorganic material which mainly contains oxides of elements selected from silicon, calcium and magnesium, or calcium sulfate, and the thickness of the converter is in the range of from 10 $\mu$m to 5 mm.

5. The process of claim 1, wherein the wavelength converter (10) is located at an opposed location to the near-infrared heater (13) with the parison (12) to be heated in between.

6. The process of claim 1, wherein the wavelength converter (10) is formed of a material having an emissivity of 0.9 or more.

7. The process of claim 1, wherein the thermoplastic resin for forming the parison (12) is aromatic polyester resins selected from polyethylene terephthalate, polyethylene isophthalate or polyethylene naphthalate.


**Patentansprüche**

1. Verfahren zum Herstellen eines hohlen Harzformkörpers, das die Schritte
Erwärmen eines Vorformlings (12), der aus einem thermoplastischen Harzmaterial gebildet ist, und
Blasformen des erwärmten Vorformlings (12) umfasst, wobei der Schritt des Erwärmens des Vorformlings (12) **dadurch gekennzeichnet ist, dass**
ein Nahinfrarotheizgerät (13), das Strahlung mit einer Wellenlänge maximaler Energie im Bereich von 900 bis 1500 nm aussendet, und
ein Wellenlängenwandler (10) verwendet werden, der außerhalb des Vorformlings (12) angeordnet ist und in der Lage ist, die Strahlung des Nahinfrarotheizgeräts (13) zu absorbieren und der in der Lage ist, Infrarotstrahlung mit einer Wellenlänge auszusenden, die länger ist als die Wellenlänge maximaler Energie.

2. Verfahren gemäß Anspruch 1, worin der Wellenlängenwandler (10) Strahlung mit einer Wellenlänge maximaler Energie im Bereich von 3000 bis 5000 nm aussendet.

3. Verfahren gemäß Anspruch 1, worin der Wellenlängenwandler (10) aus Ruß und/oder Graphit gebildet ist.

4. Verfahren gemäß Anspruch 1, worin der Wandler (10) aus einem anorganischen Material gebildet ist, das im Wesentlichen Oxide von Elementen ausgewählt aus Silizium, Kalzium und Magnesium oder Kalziumsulfat enthält und worin die Dicke des Wandlers im Bereich von 10 $\mu$m bis 5 mm liegt.

5. Verfahren gemäß Anspruch 1, worin der Wellenlängenwandler (10) an einer Stelle angeordnet ist, die dem Nahinfrarotheizgerät (13) gegenüber liegt, sodass der zu erwärmende Vorformling (12) dazwischen angeordnet ist.

6. Verfahren gemäß Anspruch 1, worin der Wellenlängenwandler (10) aus einem Material mit einem Strahlungsvermögen von 0,9 oder mehr gebildet ist.

7. Verfahren gemäß Anspruch 1, worin das thermoplastische Harz zum Bilden des Vorformlings (12) aromatisches Polyesterharz ausgewählt aus Polyethylentherephtalat, Polyethylenisophtalat oder Polyethylennaphthalat ist.

**Revendications**

1. Procédé de production d'un produit moulé creux en résine qui comprend les étapes consistant à :

chauffer une paraison (12) se composant d'un matériau en résine thermoplastique, et
mouler par soufflage la paraison (12) chauffée,
dans lequel l'étape de chauffage de la paraison (12) est **caractérisée par** l'utilisation
d'un dispositif de chauffage dans le proche infrarouge (13) émettant un rayonnement ayant une longueur d'onde d'énergie maximale dans la plage de 900 à 1500 nm, et
d'un convertisseur de longueur d'onde (10) qui est situé sur l'extérieur de la paraison (12) et qui est capable d'absorber le rayonnement issu du dispositif de chauffage dans le proche infrarouge (13) et qui est capable d'émettre un rayonnement infrarouge ayant une longueur d'onde supérieure à la longueur d'onde d'énergie maximale.

2. Procédé selon la revendication 1, dans lequel le convertisseur de longueur d'onde (10) émet un rayonnement ayant une longueur d'onde d'énergie maximale dans la plage allant de 3000 à 5000 nm.

3. Procédé selon la revendication 1, dans lequel le convertisseur de longueur d'onde (10) se compose de noir de carbone et/ou de graphite.

4. Procédé selon la revendication 1, dans lequel le convertisseur (10) est formé sur un matériau inorganique qui comprend principalement des oxydes d'éléments choisis parmi le silicium, le calcium et le magnésium, ou du sulfate de calcium, et l'épaisseur du convertisseur est comprise dans la plage allant de 10 $\mu$m à 5 mm.

5. Procédé selon la revendication 1, dans lequel le convertisseur de longueur d'onde (10) est situé en une position opposée au dispositif de chauffage dans le proche infrarouge (13), la paraison (12) à chauffer étant entre les deux.

6. Procédé selon la revendication 1, dans lequel le convertisseur de longueur d'onde (10) se compose d'un matériau ayant une émissivité de 0,9 ou plus.

7. Procédé selon la revendication 1, dans lequel la résine thermoplastique pour la formation de la paraison (12) est une résine de polyester aromatique choisie parmi le téréphtalate de polyéthylène, l'isophtalate de polyéthylène ou le naphtalate de polyéthylène.

FIG. 1

13    Near-infrared heater    12

11

Reflector

FIG. 2

13

12

11

10

FIG. 3

Wavelength pattern of irradiation strength from infrared heater

Wavelength dependency of transmission rate in polyethylene terephthalate (PET) resin

Wavelength distribution of irradiation strength from converter

Wavelength (nm x 1000)

Infrared Ray Irradiation Strength (%)

Transmission rate of PET (%)

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2632960 B
- JP 1851514 A
- JP 1294025 A
- JP 3163168 B
- JP 2000313053 A
- JP 2074319 A
- JP 1184118 A

**Non-patent literature cited in the description**

- **YUKI KAZUO.** Saturated Polyester Resin Handbook. *Nikkan Kogyo Shinbunsha,* 1989